(19) Europäisches Patentamt
European Patent Office
Office européen des brevets

(11) Veröffentlichungsnummer: **0 041 143**
**B1**

# (12) EUROPÄISCHE PATENTSCHRIFT

(45) Veröffentlichungstag der Patentschrift: **23.03.83**

(21) Anmeldenummer: **81103508.8**

(22) Anmeldetag: **08.05.81**

(51) Int. Cl.³: **C 07 F 9/113**, C 07 F 9/173, C 07 F 9/24, C 07 F 9/40, C 07 F 9/32, C 07 F 9/44, C 07 F 9/65, A 01 N 57/10, A 01 N 57/18, A 01 N 57/26

## (54) Phosphorsäureester, ihre Herstellung und ihre Verwendung zur Bekämpfung von Schädlingen und Mittel dafür.

(30) Priorität: **02.06.80 DE 3020897**

(43) Veröffentlichungstag der Anmeldung: **09.12.81 Patentblatt 81/49**

(45) Bekanntmachung des Hinweises auf die Patenterteilung: **23.03.83 Patentblatt 83/12**

(84) Benannte Vertragsstaaten: **BE CH DE FR GB IT LI NL**

(56) Entgegenhaltungen:
**DE-B-1 206 425**
**US-A-2 802 855**
**US-A-2 908 605**

(73) Patentinhaber: **BASF Aktiengesellschaft, Carl-Bosch-Strasse 38, D-6700 Ludwigshafen (DE)**

(72) Erfinder: **Kiehs, Karl, Dr., Sudetenstrasse 22, D-6840 Lampertheim (DE)**
Erfinder: **Adolphi, Heinrich, Dr., Kalmitweg 11, D-6703 Limburgerhof (DE)**

EP 0 041 143 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Phosphorsäureester, ihre Herstellung und ihre Verwendung zur Bekämpfung von Schädlingen und Mittel dafür

Die vorliegende Erfindung betrifft neue Phosphorsäureester, Verfahren zu deren Herstellung, deren Verwendung als Schädlingsbekämpfungsmittel, Schädlingsbekämpfungsmittel, die diese Phosphorsäureester enthalten, Verfahren zur Herstellung solcher Mittel sowie Verfahren zur Bekämpfung von Schädlingen mit diesen Phosphorsäureestern.

Aus der US-PS 2 908 605 sind bereits Phosphate von Carbamoylvinylverbindung bekannt, wie z. B. das O,O-Dimethyl-O-[(1-methyl-2-chlor-2,2-diethyl-carbamoyl)vinyl]phosphat, welches auch als »Phosphamidon« bezeichnet wird. Die Wirkung dieser Verbindung bei der Schädlingsbekämpfung ist jedoch nicht immer befriedigend.

Es wurde nun gefunden, daß Phosphorsäureester der Formel I,

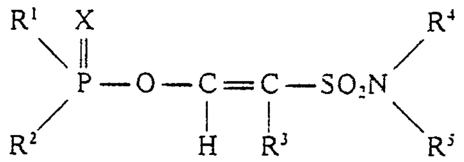

(I)

worin

| | |
|---|---|
| $R^1$ | einen Alkoxyrest mit bis zu 4 C-Atomen oder einen Phenylrest |
| $R^2$ | eine Alkoxy- bzw. Alkylthiogruppe mit bis zu 4 C-Atomen, eine Alkylamino- oder Dialkylaminogruppe mit bis zu 4 C-Atomen in jeder Alkylgruppe, |
| $R^3$ | Methyl, Ethyl, Wasserstoff oder Chlor, |
| $R^4$, $R^5$ | Phenyl oder Alkylgruppen mit jeweils bis zu 4 C-Atomen oder zusammen mit dem Stickstoffatom einen 5- bis 7gliedrigen Heterocyclus und |
| X | ein Sauerstoff- oder Schwefelatom |

bedeuten, insektizid und akarizid sehr gut wirksam sind.

Alkoxireste für $R^1$ sind beispielsweise Methoxi, Ethoxi, Propoxi, Isopropoxi, Butoxi, Isobutoxi; Alkoxy- oder Alkylthioreste für $R^2$ sind beispielsweise Methoxy, Ethoxy, n-Propoxy, Isopropoxy, n-Butoxy, sec.-Butoxy, Methylthio, Ethylthio, n-Propylthio, Isopropylthio, n-Butylthio, sec.-Butylthio, Isobutylthio. Als Alkylamino- bzw. Dialkylaminoreste kommen für $R^2$ beispielsweise Methylamino, Dimethylamino, Ethylamino, Diethylamino, Methylethylamino, Diisopropylamino, n-Butylamino, Di-n-butylamino in Betracht. Alkylreste für $R^4$ und $R^5$ sind beispielsweise Methyl, Ethyl, Propyl, Isopropyl, Butyl, Isobutyl. Beispiele für 5- bis 7gliedrige Heterocyclen sind Pyrrolidin, Morpholin, Piperidin, Hexamethylenimin.

Bevorzugte Substituenten für $R^1$ sind Methoxi und Ethoxi, Phenyl; bevorzugte Substituenten für $R^2$ sind Methoxi, Ethoxi, n-Propylthio, Isobutylthio, sec.-Butylthio, Methylamino, Dimethylamino und Isopropylamino. $R^3$ ist bevorzugt Wasserstoff, Chlor oder Methyl. $R^4$ und $R^5$ sind vorzugsweise Methyl, Ethyl oder zusammen mit dem Stickstoffatom ein Pyrrolidin- oder Morpholinring.

Die neuen Phosphorsäureester der Formel I lassen sich herstellen, indem man Carbonylverbindungen der Formel II

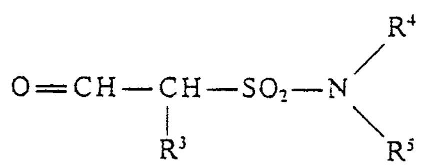

(II)

worin $R^3$, $R^4$ und $R^5$ die angegebene Bedeutung besitzen, mit einem Phosphorhalogenid der Formel III

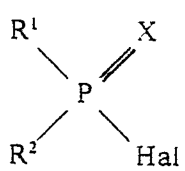

(III)

worin $R^1$, $R^2$ und X die angegebene Bedeutung besitzen, umsetzt.

Die Verbindungen II liegen in einem Gleichgewicht vor:

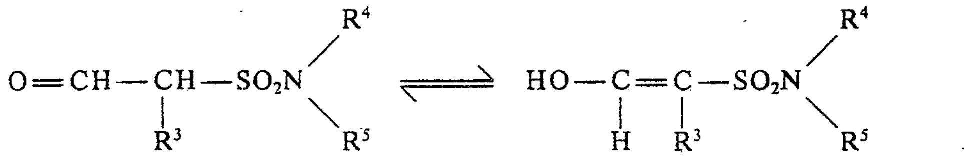

(II)

Mit den Phosphorhalogeniden III reagiert die Enolform. Die Umsetzung von II mit III gelingt gut in Gegenwart von Säureakzeptoren, wie Alkalihydroxiden und -carbonaten, aliphatischen, aromatischen oder heterocyclischen Aminen. Man kann auch die Verbindungen II in Form der Alkali-, Erdalkali- oder Ammoniumsalze mit III umsetzen. Als Lösungsmittel eignen sich trockene aprotische Lösungsmittel wie aliphatische oder aromatische Kohlenwasserstoffe, cyclische und acyclische Ether, Ketone wie Aceton, Methylethylketon, Nitrile wie Acetonitril und Propionitril oder Amide wie Dimethylformamid und N-Methylpyrrolidon oder Dimethylsulfoxid. Die Reaktion ist auch in zweiphasigen wäßrig-organischen Medien möglich, als organische Solventien dienen die obengenannten, soweit sie mit Wasser nicht mischbar sind.

Die Umsetzung erfolgt bei −30 bis +100° C, vorzugsweise 0 bis +80° C.

Die Verbindungen II lassen sich aus den entsprechenden Alkylsulfonamiden durch Kondensation mit Ameisensäureester nach folgendem Schema herstellen:

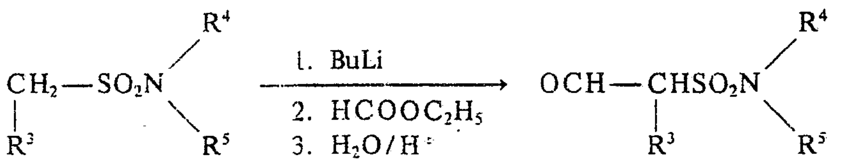


(II)

Die Verbindungen der Formel II können isoliert und in reiner Form zur Herstellung der Phosphorsäureester eingesetzt werden, sie können aber auch ohne Isolierung in reiner Form nach ihrer Herstellung direkt in situ phosphoryliert werden.

Die Phosphorylierungskomponenten sind bekannt und nach üblichen Literaturverfahren herstellbar.

Die neuen Ester sind nicht destillierbare Öle. Neben der Elementaranalyse sind sie durch Brechungsindex, IR- und NMR-Daten charakterisiert.

## Beispiel 1

Zu einer Lösung von 0,1 Mol Methansulfonsäure-N-N-dimethylamid in 75 ml absolutem Tetrahydrofuran tropft man bei −5° C 0,1 Mol BuLi als 15%ige Lösung in n-Hexan. 1/2 Stunde nach beendeter Zugabe werden 0,1 Mol Ameisensäureethylester zugegeben und bei Raumtemperatur 5 Stunden gerührt. Anschließend versetzt man mit 0,1 Mol O,O-Diethylthiophosphorylchlorid und erwärmt 1—2 Stunden auf 50° C. Nach dem Abdestillieren des Lösungsmittels wird der Rückstand in Methylenchlorid gelöst und 2mal mit Wasser gewaschen. Der nach dem Einengen der organischen Phase verbleibende Rückstand enthält noch unumgesetztes Ausgangsmaterial, das bei 0,08 mbar abdestilliert wird. Man erhält 16 g O,O-Diethyl-O-(2-dimethylaminosulfonyl)-vinyl-thiophosphat als gelbliches Öl, $n_D^{25}$ : 1,4870

Analog Beispiel 1 erhält man:

| Beispiel | $R^1$ | $R^2$ | X | $R^3$ | $R^4$ | $R^5$ | $n_D^{25}$ |
|---|---|---|---|---|---|---|---|
| 2 | $C_2H_5O$ | n-$C_3H_7S$ | S | H | $CH_3$ | $CH_3$ | 1.5047 |
| 3 | $C_2H_5O$ | $C_2H_5O$ | O | $CH_3$ | $CH_3$ | $CH_3$ | 1.4408 |
| 4 | $C_2H_5O$ | n-$C_3H_7S$ | S | $CH_3$ | $CH_3$ | $CH_3$ | 1.4980 |
| 5 | $C_2H_5O$ | $C_2H_5O$ | S | $CH_3$ | $CH_2—CH_2—O—CH_2$ | | 1.4812 |
| 6 | $C_2H_5O$ | $C_2H_5O$ | S | Cl | $CH_3$ | $CH_3$ | 1.4930 |
| 7 | $C_2H_5O$ | n-$C_3H_7S$ | S | Cl | $CH_3$ | $CH_3$ | 1.5128 |
| 8 | $C_2H_5O$ | n-$C_3H_7S$ | S | H | $CH_2—CH_2—O—CH_2—CH_2$ | | 1.5308 |
| 9 | $C_2H_5O$ | $C_2H_5O$ | S | H | $CH_2—CH_2—O—CH_2—CH_2$ | | 1.5012 |
| 10 | $C_2H_5O$ | $C_2H_5O$ | O | H | $CH_3$ | $CH_3$ | 1.4608 |
| 11 | $C_2H_5O$ | $C_2H_5O$ | S | $CH_3$ | $CH_3$ | $CH_3$ | 1.4900 |
| 12 | $C_2H_5O$ | $C_2H_5O$ | S | H | $CH_3$ | 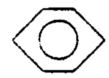 | 1.6325 |
| 13 | $C_2H_5O$ | n-$C_3H_7S$ | S | H | $CH_3$ | 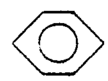 | 1.5620 |
| 14 | $C_2H_5O$ | $C_2H_5O$ | S | H | $C_2H_5$ | $C_2H_5$ | 1.4860 |
| 15 | $C_2H_5O$ | $C_2H_5O$ | S | H | $C_2H_5$ | $C_2H_5$ | 1.5138 |
| 16 | $C_2H_5O$ | $C_2H_5O$ | O | H | $CH_3$ | 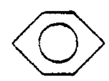 | 1.5065 |
| 17 | $C_2H_5O$ | sec. but.-S | S | $CH_3$ | $CH_3$ | $CH_3$ | 1.5175 |
| 18 | $CH_3O$ | $CH_3O$ | S | $CH_3$ | $CH_3$ | $CH_3$ | 1.4970 |
| 19 | $C_2H_5O$ | $C_2H_5O$ | S | $CH_3$ | $—(CH_2)_4—$ | | 1.5005 |
| 20 | $C_2H_5O$ | $C_2H_5O$ | O | $CH_3$ | $CH_2—CH_2—O—CH_2—CH_2$ | | 1.4740 |
| 21 | $C_2H_5O$ | $C_2H_5O$ | O | H | $—(CH_2)_4—$ | | 1.4848 |
| 22 | $C_2H_5O$ | i-but.-S | S | $CH_3$ | $CH_3$ | $CH_3$ | 1.5200 |
| 23 | $C_2H_5O$ | $C_2H_5O$ | S | $CH_3$ | $C_2H_5$ | $C_2H_5$ | 1.4835 |
| 24 | $C_2H_5O$ | n-$C_3H_7S$ | S | $CH_3$ | $C_2H_5$ | $C_2H_5$ | 1.5165 |
| 25 | $C_2H_5O$ | i-$C_4H_9S$ | S | Cl | $CH_3$ | $CH_3$ | |
| 26 | $C_2H_5O$ | i-$C_3H_7NH$ | O | Cl | $CH_3$ | $CH_3$ | |
| 27 | $C_6H_5$ | n-$C_3H_7S$ | S | H | $CH_3$ | $CH_3$ | |
| 28 | $C_2H_5O$ | i-$C_3H_7NH$ | S | $CH_3$ | $CH_3$ | $CH_3$ | |
| 29 | $CH_3O$ | $CH_3O$ | S | $CH_3$ | $C_2H_5$ | $C_2H_5$ | |

Die erfindungsgemäßen Verbindungen der Formel I sind geeignet, Schädlinge aus der Klasse der Insekten und Milben wirksam zu bekämpfen. Sie sind als Adultizide und Ovizide geeignet.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini

(Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarius (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling);
aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestis (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner);
aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ovis, Chrysomya macellaria, Chrysomya hominivorax, Lucilia cuprina, Lucilia sericata, Hypoderma lineata;
aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), Atta sexdens (Blattschneiderameise);
aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);
aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);
aus der Ordnung der Termiten (Isoptera) beispielsweise Reticulitermes lucifugus, Calotermes flavicollis, Leucotermes flavipes, Termes natalensis;
aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschnecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melano plus femur-rubrum (Rotbeinige Heuschrecke), Blatta orientalis (Küchenschabe), Blattella

germanica (Deutsche Schabe), Periplaneta americana (Amerikanische Schabe), Blabera gigantea (Riesenschabe).

Zur Klasse der Arachnoidea gehören Milben und Zecken (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z. B. Meloidogyne incognita, Meloidogyne hapla, Meloidogyne javanica, Zysten bildende Nematoden, z. B. Globodera rostochiensis, Heterodera schachtii, Heterodera avenae, Heterodera glycines, Heterodera triflolii, Stock- und Blattälchen, z. B. Ditylenchus dipsaci, Dithylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die erfindungsgemäßen Verbindungen können mit Erfolg im Pflanzenschutz sowie auf dem Hygiene-, Vorratsschutz- und Veterinärsektor als Schädlingsbekämpfungsmittel eingesetzt werden. Dabei können sie als Kontakt- und Fraßgifte verwendet werden.

Die Wirkstoffe können als solche, in Form ihrer Formulierungen oder den daraus bereiteten Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanol, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 3 Gewichtsteile des Wirkstoffs Nr. 1 werden mit 97 Gewichtsteilen feinteiligem Kaolin innig vermischt. Man erhält auf diese Weise ein Stäubemittel, das 3 Gew.-% des Wirkstoffs enthält.

II. 30 Gewichtsteile des Wirkstoffs Nr. 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile des Wirkstoffs Nr. 4 werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.-% des Wirkstoffs enthält.

IV. 20 Gewichtsteile des Wirkstoffs Nr. 6 werden in einer Mischung gelöst, die aus 40 Gewichtsteilen Cyclohexanon, 30 Gewichtsteilen Isobutanol, 20 Gewichtsteilen des Anlagerungsproduktes von 7

Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.-% Wirkstoff, vorzugsweise zwischen 0,5 und 90 Gew.-%.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden:

1,2-Dibrom-3-chlorpropan,
1,3-Dichlorpropen,
1,3-Dichlorpropen + 1,2-Dichlorpropan,
1,2-Dibrom-ethan,
2-sec.-Butylphenyl-N-methylcarbamat,
o-Chlorphenyl-N-methylcarbamat,
3-Isopropyl-5-methylphenyl-N-methylcarbamat,
o-Isopropoxyphenyl-N-methylcarbamat,
3,5-Dimethyl-4-methylmercapto-phenyl-N-methylcarbamat,
4-Dimethylamino-3,5-xylyl-N-methylcarbamat,
2-(1,3-Dioxolan-2-yl)-phenyl-N-methylcarbamat,
1-Naphthyl-N-methylcarbamat,
2,3-Dihydro-2,2-dimethyl-benzofuran-7-yl-N-methylcarbamat,
2,2-Dimethyl-1,3-benzodioxol-4-yl-N-methylcarbamat,
2-Dimethylamino-5,6-dimethyl-4-pyrimidinyl-dimethylcarbamat,
2-Methyl-2-(methylthio)-propionaldehyd-O-(methylcarbamoyl)-oxim,
S-Methyl-N-[(methylcarbamoyl)-oxy]-thio-acetimidat,
Methyl-N',N'-dimethyl-N-[(methylcarbamoyl)oxy]-1-thiooxamidat,
N-(2-Methyl-4-chlor-phenyl)-N',N'-dimethylformamidin,
Tetrachlorthiophen,
1-(2,6-Difluor-benzoyl)-3-(4-chlor-phenyl)-harnstoff,
O,O-Dimethyl-O-(p-nitrophenyl)-phosphorthioat,
O,O-Diethyl-O-(p-nitrophenyl)-phosphorthioat,
O-Ethyl-O-(p-nitrophenyl)-phenyl-phosphonothioat,
O,O-Dimethyl-O-(3-methyl-4-nitrophenyl)-phosphorthioat,
O,O-Diethyl-O-(2,4-dichlorphenyl)-phosphorthioat,
O-Ethyl-O-(2,4-dichlorphenyl)-phenyl-phosphonothioat,
O,O-Dimethyl-O-(2,4,5-trichlorphenyl)-phosphorthioat,
O-Ethyl-O-(2,4,5-trichlorphenyl)-ethyl-phosphonothioat,
O,O-Dimethyl-O-(4-brom-2,5-dichlorphenyl)-phosphorthioat,
O,O-Dimethyl-O-(2,5-dichlor-4-iodphenyl)-phosphorthioat,
O,O-Dimethyl-O-(3-methyl-4-methylthiophenyl)-phosphorthioat,
O-Ethyl-O-(3-methyl-4-methylthiophenyl)-isopropyl-phosphoramidat,
O,O-Diethyl-O-[p-methylsulfinyl)-phenyl]-phosphorthioat,
O-Ethyl-S-phenyl-ethyl-phosphonodithioat,
O,O-Diethyl-[2-chlor-1-(2,4-dichlorphenyl)-vinyl]-phosphat,
O,O-Dimethyl-[-2-chlor-1-(2,4,5-trichlorphenyl)]-vinyl-phosphat,
O,O-Dimethyl-S-(1'-phenyl)-ethylacetat-phosphordithioat,
Bis-(dimethylamino)-fluorphosphinoxid,

Octamethyl-pyrophosphoramid,
O,O,O,O-Tetraethyldithio-pyrophosphat,
S-Chlormethyl-O,O-diethyl-phosphordithioat,
O-Ethyl-S,S-dipropyl-phosphordithioat,
O,O-Dimethyl-O-2,2-dichlorvinyl-phosphat,
O,O-Dimethyl-1,2-dibrom-2,2-dichlorethylphosphat,
O,O-Dimethyl-2,2,2-trichlor-1-hydroxy-ethylphosphonat,
O,O-Dimethyl-S-[1,2-biscarbethoxy-ethyl-(1)]-phosphordithioat,
O,O-Dimethyl-O-(1-methyl-2-carbmethoxy-vinyl)-phosphat,
O,O-Dimethyl-S-(N-methyl-carbamoyl-methyl)-phosphordithioat,
O,O-Dimethyl-S-(N-methyl-carbamoyl-methyl)-phosphorthioat,
O,O-Dimethyl-S-(N-methoxyethyl-carbamoyl-methyl)-phosphordithioat,
O,O-Dimethyl-S-(N-formyl-N-methyl-carbamoylmethyl-phosphordithioat,
O,O-Dimethyl-O-[1-methyl-2-(methyl-carbamoyl)-vinyl]-phosphat,
O,O-Dimethyl-O-[(1-methyl-2-dimethylcarbamoyl)-vinyl]-phosphat,
O,O-Dimethyl-O-[(1-methyl-2-chlor-2-diethylcarbamoyl)-vinyl]-phosphat,
O,O-Diethyl-S-(ethylthio-methyl)-phosphordithioat,
O,O-Diethyl-S-[(p-chlorphenylthio)-methyl]-phosphordithioat,
O,O-Dimethyl-S-(2-ethylthioethyl)-phosphorthioat,
O,O-Dimethyl-S-(2-ethylthioethyl)-phosphordithioat,
O,O-Dimethyl-S-(2-ethylsulfinyl-ethyl)-phosphorthioat,
O,O-Diethyl-S-(2-ethylthio-ethyl)-phosphordithioat,
O,O-Diethyl-S-(2-ethylsulfinyl-ethyl)-phosphorthioat,
O,O-Diethyl-thiophosphoryliminophenyl-acetonitril,
O,O-Diethyl-S-(2-chlor-1-phthalimidoethyl)-phosphordithioat,
O,O-Diethyl-S-[6-chlor-benzoxazolon-(2)-yl(3)]-methyldithiophosphat,
O,O-Dimethyl-S-[2-methoxy-1,3,4-thiadiazol-5-[4H]-only-(4)-methyl]-phosphordithioat,
O,O-Diethyl-O-[3,5,6-trichlor-pyridyl-(2)]-phosphorthioat,
O,O-Diethyl-O-(2-pyrazinyl)-phosphorthioat,
O,O-Diethyl-O[2-isopropyl-4-methyl-pyrimidinyl(6)]-phosphorthioat,
O,O-Diethyl-O-[2-(diethylamino)-6-methyl-4-pyrimidinyl]-thionophosphat,
O,O-Dimethyl-S-(4-oxo-1,2,3-benzotriazin-3-[4H]-yl-methyl)-phosphordithioat,
O,O-Dimethyl-S-[(4,6-diamino-1,3,5-triazin-2-yl)-methyl]-phosphordithioat,
O,O-Diethyl-(1-phenyl-1,2,4-triazol-3-yl)-thionophosphat,
O,S-Dimethyl-phosphor-amido-thioat,
O,S-Dimethyl-N-acetyl-phosphoramidothioat,
γ-Hexachlorcyclohexan,
1,1-Di-(p-methoxyphenyl)-2,2,2-trichlor-ethan,
6,7,8,9,10,10-Hexachloro-1,5,5a,6,9,9a-hexahydro-6,9-methano-2,4,3-benzodioxa-thiepin-3-oxid,
Pyrethrine, DL-2-Allyl-3-methyl-cyclopenten-(2)-on-(1)-yl-(4)-DL-cis,-trans-chrysanthemat,
5-Benzyl-furyl-(3)-methyl-DL-cis,-trans-chrysanthemat,
3-Phenoxybenzyl(±)-cis,trans-2,2-dimethyl-3-(2,2-dichlorvinyl)-cyclopropancarboxylat,
α-Cyano-3-phenoxybenzyl(±)-cis,trans-2,2-dimethyl-3-(2,2-dichlorvinyl)-cyclopropancarboxylat,
(s)-α-Cyano-3-phenoxybenzyl-cis(1R,3R)-2,2-dimethyl-3-(2,2-dibromvinyl)-cyclopropancarboxylat,
3,4,5,6-Tetrahydrophthalimidoethyl-DL-cis,trans-chrysanthemat,
2-Methyl-5-(2-propinyl)-3-furylmethyl-chrysanthemat,
(α-Cyano-3-phenoxybenzyl)-α-isopropyl-4-chlorphenylacetat.

Die folgenden Beispiele belegen die biologische Wirkung der neuen Verbindungen. Vergleichsverbindung ist das Phosphamidon.

## Beispiel A

### Kontaktwirkung auf Schaben (Blatta orientalis)

Der Boden eines 1-l-Weckglases wird mit der azetonischen Lösung des Wirkstoffes behandelt.

Nach Verdunsten des Lösungsmittels setzt man je Glas 5 adulte Schaben. Die Mortalitätsrate wird nach 48 Stunden bestimmt. Dabei zeigt sich, daß beispielsweise die Substanzen der Beispiele 1, 3, 11, 14, 18 und 23 der Vergleichsverbindung deutlich überlegen sind.

## Beispiel B

### Kontaktwirkung auf Stubenfliegen (Musca domestica)

Beide Teile einer Petrischale von 10 cm Durchmesser werden mit azetonischer Wirkstofflösung ausgekleidet. Nach Verdunsten des Lösungsmittels bringt man je 10 Fliegen in die Schalen.

Die Mortalitätsrate wird nach 4 Stunden festgestellt. Dabei zeigt sich, daß beispielsweise die Substanzen der Beispiele 3, 11, 17, 18, 19, 20, 22, 23 und 24 der Vergleichsverbindung deutlich überlegen sind.

## Beispiel C

### Zuchtversuch mit Stubenfliegen (Musca domestica)

50 g eines Nährbodens aus

100 Teilen Wasser
10 Teilen Bäckerhefe
10 Teilen Trockenmilch
1 Teil Agar

werden in warmem Zustand mit der wäßrigen Aufbereitung des Wirkstoffs gründlich durchmischt.

Nach Erkalten belegt man den Nährboden mit ca. 0,1 ml Fliegeneiern und beobachtet deren Entwicklung über eine Woche.

Die Versuchstemperatur liegt bei 20° C.

In diesem Versuch sind beispielsweise die Substanzen der Beispiele 3, 4, 14, 15, 17, 18, 22, 23 und 24 der Vergleichsverbindung deutlich überlegen.

## Beispiel D

### Kontaktwirkung auf Kornkäfer (Sitophilus granaria)

Petrischalen von 10 cm Durchmesser werden mit der azetonischen Wirkstofflösung ausgekleidet. Nach Verdunsten des Lösungsmittels belegt man die Schalen mit 100 Kornkäfern.

Nach 4 Stunden werden die Käfer in unbehandelte Gefäße überführt. Die Mortalitätsrate wird nach 24 Stunden ermittelt. Dabei wird festgestellt, wieviel Käfer in der Lage sind, nach diesem Zeitpunkt innerhalb 60 Minuten ein unbehandeltes Pappschälchen (Durchmesser 40 mm, Höhe 10 mm) zu verlassen.

In diesem Versuch sind beispielsweise die Substanzen der Beispiele 10, 14, 16 und 18 deutlich besser als die Vergleichsverbindung.

## Beispiel E

### Zuchtversuch mit Drosophila melanogaster

40 ml eines Kleie-Agar-Nährbodens werden bei 60° C in Plastik-Flaschen (250 ml) abgefüllt und darauf mit 2 ml der wäßrigen Wirkstoffaufbereitung innig vermischt.

Nach Erkalten beimpft man den Nährboden mit einer Hefesuspension und gibt eine Filterpapierrolle zu.

Anschließend setzt man 20 bis 40 ca. 6 Tage alte Drosophila ein und verschließt die Gefäße.

Die Auswertung erfolgt nach 10 Tagen.

Dabei zeigt sich, daß beispielsweise die Substanzen der Beispiele 1, 4, 5, 6, 8 und 9 der Vergleichsverbindung deutlich überlegen sind.

**Patentansprüche**

1. Phosphorsäureester der Formel I

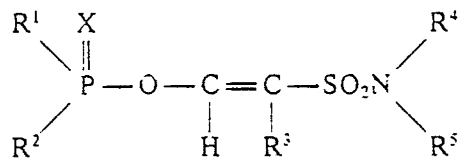

(I)

worin

- $R^1$ einen Alkoxyrest mit bis zu 4 C-Atomen oder einen Phenylrest,
- $R^2$ eine Alkoxy- bzw. Alkylthiogruppe mit bis zu 4 C-Atomen, eine Alkylamino- oder Dialkylaminogruppe mit bis zu 4 C-Atomen in jeder Alkylgruppe,
- $R^3$ Methyl, Ethyl, Wasserstoff, Chlor,
- $R^4$, $R^5$ Phenyl oder Alkylgruppen mit jeweils bis zu 4 C-Atomen oder zusammen mit dem Stickstoffatom einen 5- bis 7gliedrigen Heterocyclus und
- X ein Sauerstoff- oder Schwefelatom bedeuten.

2. Verfahren zur Herstellung von Verbindungen der Formel I gemäß Anspruch 1, dadurch gekennzeichnet, daß man Carbonylverbindungen der Formel II

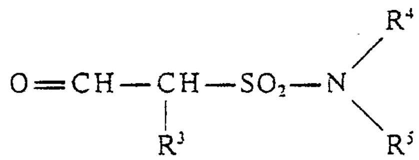

(II)

worin $R^3$, $R^4$ und $R^5$ die angegebene Bedeutung besitzen, mit einem Phosphorhalogenid der Formel III

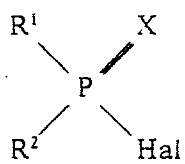

(III)

worin $R^1$, $R^2$ und X die angegebene Bedeutung besitzen, umsetzt.

3. Schädlingsbekämpfungsmittel enthaltend mindestens eine Verbindung gemäß Anspruch 1.

4. Verfahren zur Bekämpfung von Schädlingen, dadurch gekennzeichnet, daß man mindestens eine Verbindung der Formel I gemäß Anspruch 1 auf diese oder deren Eier einwirken läßt.

5. Verwendung von Verbindungen der Formel I gemäß Anspruch 1 bei der Bekämpfung von Schädlingen.

**Claims**

1. A phosphoric acid ester of the formula I

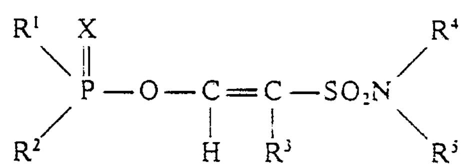

(I)

where

- $R^1$ is alkoxy of up to 4 carbon atoms or phenyl,
- $R^2$ is alkoxy or alkylthio of up to 4 carbon atoms, or alkylamino or dialkylamino, each alkyl being of up to 4 carbon atoms,
- $R^3$ is methyl, ethyl, hydrogen or chlorine,
- $R^4$, $R^5$ are phenyl or alkyl of up to 4 carbon atoms, or are, together with the nitrogen atom, a 5- to 7-membered heterocycle, and
- X is oxygen or sulfur.

2. A process for the preparation of a compound of the formula I as claimed in claim 1, wherein a carbonyl compound of the formula II

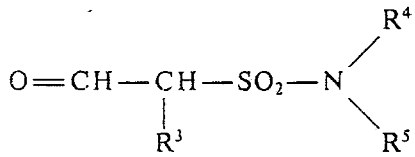

(II)

where $R^3$, $R^4$ and $R^5$ have the above meanings, is reacted with a phosphorus halide of the formula III

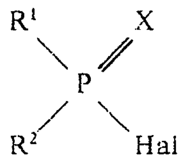

(III)

where $R^1$, $R^2$ and X have the above meanings.

3. A pesticide containing at least one compound as claimed in claim 1.

4. A process for combating pests, wherein at least one compound of the formula I as claimed in claim 1 is allowed to act on the pests or their eggs.

5. The use of compounds of the formula I as claimed in claim 1 for combating pests.

**Revendications**

1. Ester d'acide phosphorique de formule I

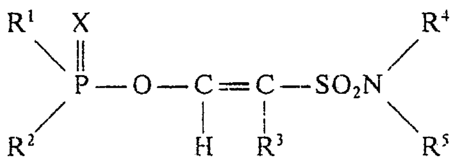

(I)

dans laquelle

| | |
|---|---|
| $R^1$ | représente un reste alcoxy ayant jusqu'à 4 atomes C ou un reste phényle, |
| $R^2$ | un groupe alcoxy ou alkyle ayant jusqu'à 4 atomes C, un groupe alkylamino ou dialkylamino ayant jusqu'à 4 atomes C dans chaque groupe alkyle, |
| $R^3$ | méthyle, éthyle, hydrogène, chlore, |
| $R^4$, $R^5$ | des groupes phényle ou alkyle ayant chacun jusqu'à 4 atomes C ou ensemble avec l'atome d'azote un hétérocycle à 5 à 7 chaînons, et |
| X | un atome d'oxygène ou de soufre. |

2. Procédé de préparation de composés de formule I selon la revendication 1, caractérisé par le fait qu'on fait réagir des composés carbonylés de formule II

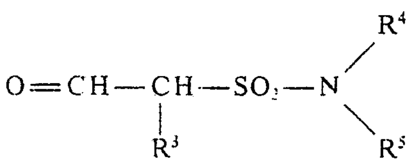

(II)

dans laquelle $R^2$, $R^4$ et $R^5$ ont les significations indiquées, avec un halogènure de phosphore de formule III

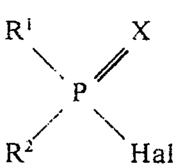

(III)

dans laquelle $R^1$, $R^2$ et X ont les significations indiquées.

3. Agent de lutte contre les parasites contenant au moins un composé selon la revendication 1.

4. Procédé de lutte contre les parasites, caractérisé par le fait qu'on fait agir au moins un composé de formule I selon la revendication 1 sur ces parasites ou leurs oeufs.

5. Utilisation de composés de formule I selon la revendication 1 pour la lutte contre les parasites.